# EUROPEAN PATENT APPLICATION

(11) **EP 1 764 403 A2**
(43) Date of publication of application: **21.03.2007**
(21) Application number: 06018649.1
(22) Date of filing: 06.09.2006
(51) Int. Cl.: C09K 11/77

(54) **Fluorescent material,fluorescent substance, display, and process for preparing fluorescent substance**

(30) Priority: 07.09.2005 JP 2005259213
(71) Applicant: CANON KABUSHIKI KAISHA, Ohta-ku, Tokyo (JP)
(72) Inventor: Oike, Tomoyuki, Ohta-ku, Tokyo (JP); Ohashi, Yoshihiro, Ohta-ku, Tokyo (JP); Iwasaki, Tatsuya, Ohta-ku, Tokyo (JP)
(74) Representative: Weser, Wolfgang

(57) **Abstract**

The present invention aims at providing a novel oxide fluorescent material. The novel oxide fluorescent material is a fluorescent material including: as constituent elements, at least one or more elements selected from the group consisting of Mg, Ca, Sr and Ba; at least one or more elements selected from the group consisting of Si and Ge; at least one or more elements selected from the group consisting of rare earth elements; and oxygen, wherein the crystal structure is a pseudowollastonite crystal structure. The fluorescent substance includes a layer 54 comprised of the fluorescent material and a layer 52 including at least one or more elements selected from the group consisting of Si and Ge, the layers stacked on a substrate 51. The fluorescent substance includes an adjacent layer that includes at least one or more elements selected from the group consisting of Si and Ge and is in contact with the portion constituted by the fluorescent material.

## Description

### BACKGROUND OF THE INVENTION

### Field of the Invention

The present invention relates to a fluorescent material, a fluorescent substance and a process for preparing the same, and a display using the fluorescent substance.

### Description of the Related Art

Preparation of a fluorescent layer having a light-emitting function and a process for synthesizing fluorescent substance powder are important technologies for realizing light emitting devices or display devices.

For preparation of a fluorescent layer, a process is employed which is optimum for each device. For example, fluorescent layers for cathode ray tubes (CRTs), plasma display panels (PDPs) or field emission displays (FEDs) are prepared by powder firing method. On the other hand, fluorescent layers for electroluminescence displays (ELDs) are prepared using a physical vapor deposition method such as electron beam deposition resistance heating deposition or sputtering, or a chemical vapor deposition method such as chemical vapor deposition, sol-gel deposition or chemical solution deposition.

To accommodate a variety of display applications, fluorescent substances are required to give full color light, and thus, fluorescent substances of three primary colors - red, green and blue which excel in luminous efficiency, color purity, stability and emission response are being developed energetically. For fluorescent substances for CRTs or FEDs, which are excited by electron beam, sulfides are in use which have undergone surface treatment with a silicate compound to improve their lifetime. However, for fluorescent substances for FEDs, the electron beam irradiation time is longer than that of fluorescent substances for CRTs, whereby their deterioration is accelerated. For fluorescent substances for PDPs, which are excited by UV light, an oxide or an oxysulfide containing sulfur as its part is in use.

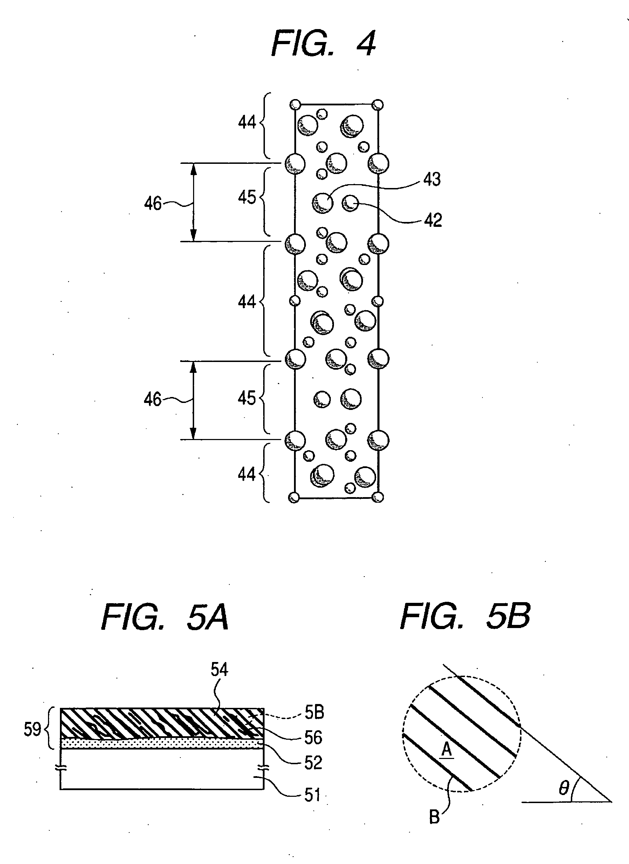

A blue fluorescent substance BaMgAl₁₀O₁₇:Eu²⁺ (BAM) for PDPs presents a problem of deterioration by moisture adsorption etc. at portions where bonding force is weak due to its crystalline structure, that is, at Ba-O layers between spinel layers in β-alumina structure. In more particular, in the β-alumina structure of the BAM fluorescent material, the distance 46 between the spinel layers between which a Ba-O layer 45 comprised of barium 42 and oxygen 43 lies, as shown in FIG. 4, is about 0.30 nm, which is larger than the size of water molecule, about 0.26 nm. This causes the adsorption of water molecules on the rare earth ions, which are replaced for part of barium 42 in the crystal, subsequently leading to deterioration by moisture.

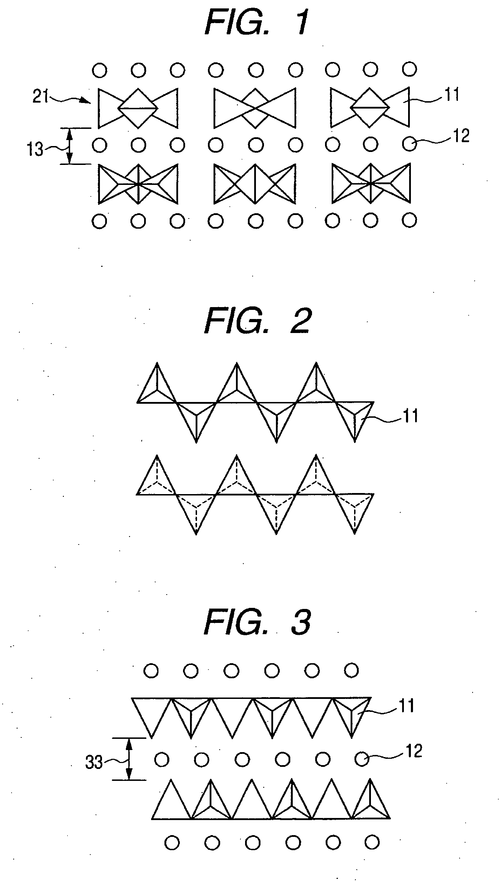

Diopside has a crystal structure where SiO₄ tetrahedrons 11 bond with each other at their two corners to form a chain-like shape, as shown in FIG. 2, and divalent metal ions 12 are packed in the chain-like portions, as shown in FIG. 3, and is known as representative of chain silicate compounds. CaMgSi₂O₆:Eu²⁺ (CMS) (Japanese Patent Application Laid-Open No. 2005-23306), which has lately attracted considerable attention as an alternative material to BAM, is considered to be less likely to suffer significant deterioration because it has the diopside crystal structure. However, the distance 33 between the two adjacent chains of SiO₄ tetrahedrons of the diopside crystal structure is about 0.30 nm, which is larger than the size of water molecule, about 0.26 nm. This causes, in the CMS fluorescent material, the adsorption of water molecules on the rare earth ions, which are replaced for part of divalent metal ions 12, subsequently leading to deterioration by moisture. As a matter of fact, in Proc. IDW' 04, 1085, 2004, it is reported that in CMS, its luminance is decreased at around room temperature compared with at lower temperature region and its temperature-luminance curve is significantly worse than in BAM.

In the light of the above described technological background, the principal object of the present invention is to provide a novel oxide fluorescent material which has good resistance to external environmental factors such as water and suffers less temperature quenching, and moreover, to provide a display using the fluorescent material.

### SUMMARY OF THE INVENTION

According to an aspect of the present invention, there is provided a fluorescent material comprising an element selected from the group consisting of Mg, Ca, Sr and Ba; an element selected from the group consisting of Si and Ge; an element selected from the group consisting of rare earth elements; and oxygen and having a pseudowollastonite crystal structure.

The fluorescent material preferably has a composition of (Mgₓ, Ca_{y}, Sr_{z}, Eu_{w}) (Si₁₋ₐGeₐ) oxide, where 0.45 ≤ x, 0.05 ≤ y ≤ 0.5, 0.05 ≤ z ≤ 0.5, 0 < w ≤ 0.4 and 0 ≤ a ≤ 1. More preferably, 0.45 ≤ x ≤ 0.55, 0.15 ≤ y ≤ 0.4, 0.05 ≤ z ≤ 0.35, 0.01 < w ≤ 0.1 and a = 0.

According to another aspect of the present invention, there is provided a fluorescent substance comprising a portion comprised of the above fluorescent material; and an adjacent layer which is comprised of an element selected from the group consisting of Si and Ge and is in contact with the portion. The interface of the portion comprised of the fluorescent material and the adjacent layer preferably has a curved shape on a cycle 0.1 to 1 µm.

According to still another aspect of the present invention, there is provided a fluorescent substance comprising a layer comprised of the above fluorescent material and a layer comprised of an element selected from the group consisting of Si and Ge, the layers stacked on a substrate.

According to a further aspect of the present invention, there is provided a display comprising the above fluorescent substanc and a means of exciting the fluorescent substance.

According to a further aspect of the present invention, there is provided a process for preparing a fluorescent substance comprising the steps of preparing a precursor by providing a first member which is comprised of an element selected from the group consisting of Mg, Ca, Sr and Ba, a rare earth element, an element selected from the group consisting of Si and Ge, and oxygen and a second member which is comprised of Si or Ge and arranging the second member adjacent to the first member and heat-treating the precursor in a reduced atmosphere. The precursor preferably comprises a layer comprised of the first member and a layer comprised of the second member, the layers stacked on a substrate.

According to a further aspect of the present invention, there is provided a display, comprising an oxide fluorescent substance that has a crystal structure of pseudowollastonite; and a means of exciting the oxide fluorescent substance.

According to the present invention, it is possible to provide a novel oxide fluorescent material which has good resistance to external environmental factors such as water and suffers less temperature quenching, and moreover, to provide a display using the fluorescent material.

Further features of the present invention will become apparent from the following description of exemplary embodiments with reference to the attached drawings.

### BRIEF DESCRIPTION OF THE DRAWINGS

FIG. 1 is a view showing the crystal structure of pseudowollastonite of the present invention, as seen across the a-axis of the crystal.

FIG. 2 is a view showing the crystal structure of diopside which is used for comparison with the present invention.

FIG. 3 is a view of the crystal structure of diopside, as seen across the b-axis of the crystal.

FIG. 4 is a view of the crystal structure of β-alumina, as seen across the a-axis of the crystal.

FIG. 5A is a sectional view of a fluorescent substance prepared in accordance with the present invention and FIG. 5B is an enlarged partial sectional view of the same.

FIG. 6 is a graph showing the excitation and emission spectra of the fluorescent substance of the present invention.

FIGS. 7A and 7B are sectional views of a fluorescent substance of the present invention before and after heat treatment, respectively.

FIG. 8 is a view of a display of the present invention.

FIG. 9 is a graph showing the dependency of the emission intensity of a fluorescent substance of the present invention on temperature.

FIG. 10 is a triangular diagram showing the compositional range for Mg, Ca and Sr of the fluorescent material of the present invention.

### DESCRIPTION OF THE EMBODIMENTS

The pseudowollastonite has a crystal structure characterized in that it includes SiO₄ tetrahedrons 11 each three of which are linked together to take the form of a three-membered ring 21 and divalent metal ions which bond the SiO₄ tetrahedrons 11 in the form of a three-membered ring together, as shown in American Mineralogist, Volume 84, pages 929-932 or in FIG. 1. The distance 13 between the three-membered ring layers is about 0.22 nm, which is small than the size of water molecule, about 0.26 nm. This makes it hard to cause the adsorption of water molecules on the rare earth ions, which are replaced for part of divalent metal ions 12, and hence deterioration by moisture.

The fluorescent material of the present invention is a novel fluorescent material prepared by adding an activator of a rare earth element to a base material having a pseudowollastonite crystal structure. Use of a fluorescent material having the crystal structure of the present invention makes it possible to decrease the dependency of luminescence or luminous efficiency on temperature.

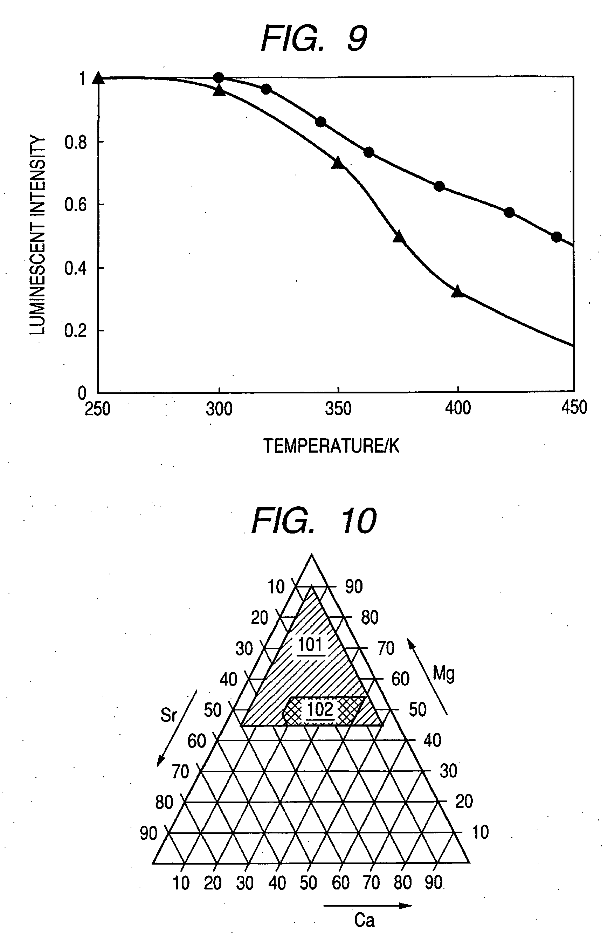

Silicate compounds having a pseudowollastonite crystal structure are generally expressed by the chemical formula XYO₃ (X, Y each represent an element), as is represented by CaSiO₃. However, the composition ratio of X, Y, O in the pseudowollastonite crystal structure that constitutes the fluorescent material of the present invention is not limited to 1 : 1 : 3. The composition ratio of X, Y, O in the fluorescent material of the present invention is not specifically limited one as long as the crystal structure that constitutes the fluorescent material is a pseudowollastonite crystal structure. For example, the fluorescent material of the present invention is an oxide of (Mgₓ, Ca_{y}, Sr_{z}, Eu_{w})(Si₁₋ₐGeₐ), that is, (Mgₓ, Ca_{y}, Sr_{z}, Eu_{w}) (Si₁₋ₐGeₐ)Oᵥ wherein the composition of Mg, Ca and Sr is such that 0.45 ≤ x, 0.05 ≤ y ≤ 0.5 and 0.05 ≤ z ≤ 0.5, as shown by the triangle 101 in the triangular diagram of FIG. 10, and 0 < w ≤ 0.4 and 0 ≤ a ≤ 1. Such a composition makes it possible to stably obtain a pseudowollastonite crystal structure and realize uniform luminescence and high luminous efficiency. Preferably the composition of Mg, Ca and Sr is such that it satisfies the following expressions: 0.45 ≤ x ≤ 0.55, 0.15 ≤ y ≤ 0.4 and 0.05 ≤ z ≤ 0.35, as shown by the region 102 in the triangular diagram of FIG. 10, and 0.01 < w ≤ 0.1 and a = 0. More preferably, the fluorescent material includes oxygen atom O in such a rate that satisfies the following expression: 2.5 ≤ v ≤ 3.5.

The fluorescent material of the present invention exhibits excellent crystallinity when it is formed into a fluorescent thin layer of fluorescent substance on a substrate. A thin layer 54 having a crystal face comprised of two kinds of layers A, B stacked alternately ABABAB ·· (A = SiO₄ or GeO₄ tetrahedral layer, B = divalent metal ion layer), as shown in FIGS. 5A and 5B, can be prepared by the preparation process described later. The fluorescent material of the present invention makes it possible to obtain a fluorescent thin layer exhibiting excellent crystallinity, thereby improving the luminance and color purity of the fluorescent substance and the stability of fluorescent thin layer.

The fluorescent material of the present invention can be synthesized in powder by using MgCO₃, SrCO₃, CaCO₃, MgCl₂, SrCl₂, CaCl₂, Eu₂O₃, EuCl₃, SiO₂ or GeO₂ as starting materials and mixing and firing the same.

The fluorescent substance of the present invention can be formed as a thin layer (hereinafter referred to as "fluorescent thin layer") on a substrate of, for example, Si, Ge, alumina, quartz or SrTiO₃.

If an adjacent layer 52, which includes Si and/or Ge, is provided in such a manner as to allow it to come in contact with the fluorescent thin layer 54, as shown in FIG. 5A, the composition deviation among the components Si, Ge and oxygen included in the fluorescent material is less likely to occur, whereby a fluorescent substance having excellent stability against environmental factors such as temperature and humidity can be obtained.

The term "fluorescent substance" used for the present invention means a fluorescent substance including a fluorescent thin layer and optionally an adjacent layer.

As materials for the adjacent layer, SiO₂, GeO₂, SiNₓ or SiOₓN_{y} can be used.

Preferably the thickness of the adjacent layer is equal to or larger than the thickness of the portion comprised of a fluorescent material. The thickness is, for example, 10 nm to 1 µm.

To obtain a fluorescent substance having a high external quantum efficiency, preferably the interface of the fluorescent thin layer and the adjacent layer has a curved surface on a cycle 0.1 to 1 µm. The reason is that the interface having a shape that changes on a cycle almost the same as the wavelength of the fluorescence in the visible range, about 0.1 to 1 µm, emitted in the inside of the fluorescent material of the present invention can scatter the emitted fluorescence effectively, whereby the fluorescent substance can emit the fluorescence outside effectively.

### (Process for preparing a fluorescent substance)

The fluorescent material of the present invention can be synthesized in powder by using MgCO₃, SrCO₃, CaCO₃, MgCl₂, SrCl₂, CaCl₂, Eu₂O₃, EuCl₃, SiO₂ or GeO₂ as starting materials and mixing and firing the same.

Besides, the fluorescent material of the present invention can be formed as a thin layer on a substrate of, for example, Si, Ge, alumina, quartz or SrTiO₃. For the formation of a fluorescent thin layer, a various types of layer forming means such as sol-gel deposition, vacuum deposition or chemical vapor deposition can be used; however, preferably sputtering is used which can provide a close and excellently reproductive layer relatively easily.

One example of preferred processes for preparing a fluorescent substance of the present invention is a process that includes: a step of preparing a precursor, which is comprised of a substrate, an adjacent layer and a fluorescent thin layer, by providing a first member that includes, as constituting elements, at least one element selected from the group consisting of Mg, Ca, Sr and Ba, at least one element selected from the group consisting of rare earth elements, at least one element selected from the group consisting of Si and Ge, and oxygen adjacent to a second member that includes Si or Ge as a main component; and a step of heat-treating the precursor in a reduced atmosphere.

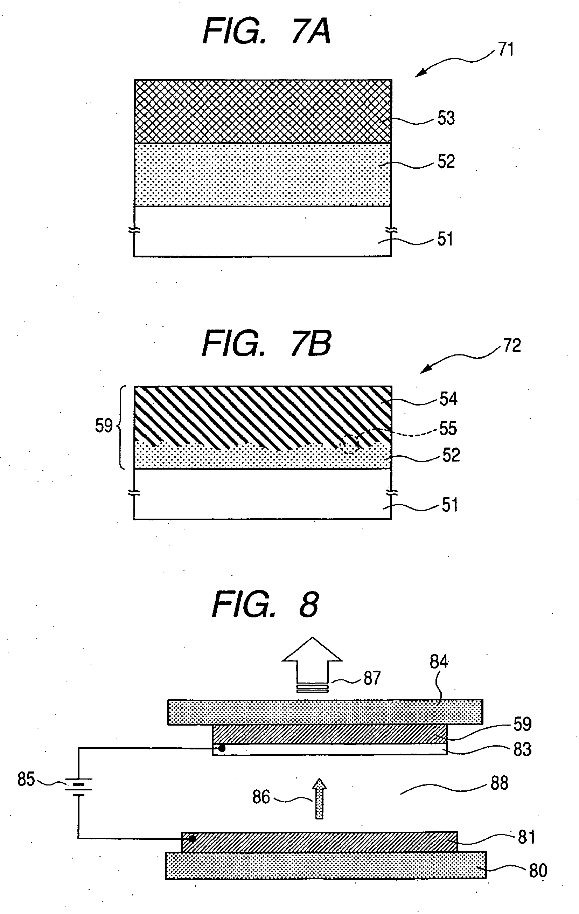

The above preparation process will be described with reference to FIGS. 7A and 7B.

First, a substrate 51 having a layer 52 which includes Si or Ge, as a second member, is prepared. Any one of various types of substrates comprised of, for example, alumina, quartz or SrTiO₃ can be used. The substrate may be a Si substrate with SiO₂ obtained by forming a thermal oxide layer in any thickness on a Si substrate or a quartz substrate may be used. A substrate on which a layer of SiO₂ or GeO₂ is formed can also be used.

On the adjacent layer 52 comprised of the second member and formed on the substrate 51, a thin layer 53 comprised of the first member, which includes, as constituting elements, at least one element selected from the group consisting of Mg, Ca, Sr and Ba, at least one element selected from the group consisting of rare earth elements, at least one element selected from the group consisting of Si and Ge, and oxygen, is formed so that a precursor 71 comprised of the thin layer 53, the adjacent layer 52 and the substrate 51 is formed (FIG. 7A). For forming the thin layer 53, a various types of layer forming means such as sol-gel deposition, vacuum deposition or chemical vapor deposition can be used; however, preferably sputtering is used which can provide a close and excellently reproductive layer relatively easily.

The precursor 71 is subjected to heat treatment in a reduced atmosphere so that its crystallinity is improved and the activator added is activate. Examples of reduced atmospheres include: atmospheres of an inert gas such as N₂, Ar or He, hydrogen gas, carbon monoxide gas, or a mixed gas of hydrogen or carbon monoxide with N₂, Ar or He; and a vacuum atmosphere. To obtain divalent Eu, preferably a mixed gas of Ar or He that contains several % of H₂ is used. The heat treatment temperature is in the range of, for example, 600°C to 1400°C, though it depends on the composition of the materials used or the atmosphere in which the treatment is conducted.

The heat treatment causes diffusion of substances between the thin layer 53 and the adjacent layer 52, whereby a fluorescent thin layer 54 having excellent crystallinity can be formed. As a result, a fluorescent structure 72 is obtained which includes a fluorescent substance 59 comprised of the fluorescent thin layer 54 and the adjacent layer 52 on the substrate 51. Further, since the adjacent layer 52 contains a Si or Ge composition (e.g. SiO₂, GeO₂) which is also contained in the fluorescent thin layer 54, the fluorescent thin layer 54 can be preferably prepared by an easy process in a stable manner while avoiding the effect of the composition deviation in the thin layer. To fully obtain the effect of the substance diffusion, preferably the thickness of the thin layer 53 prepared in advance is equal to or larger than the thickness of the fluorescent thin layer 54.

The identification of the material composition and crystal structure can be made by X-ray diffraction analysis, X-ray fluorescence analysis, energy-dispersive spectrometry, inductively coupled plasma emission spectrometry, or transmission electron microscopy.

Combining the above described fluorescent substance with means of exciting the fluorescent substance provides a display. Examples of exciting means include: electron beam, UV light, and X ray. In other words, the fluorescent substance of the present invention is applicable to FEDs using electron beam excitation, PDPs using UV light excitation, light emitting devices such as EL, image displays, lighting systems or printing systems.

In the following the present invention will be further described by examples with reference to FIGS. 7A, 7B and 8; however, it is to be understood these examples are not intended to limit the present invention.

### Example 1

In this example, was prepared on a substrate a silicate fluorescent substance characterized in that it was composed of Mg, Ca, Sr, Si, O, as constituting elements, it included a rare earth element, as an activator, and its crystal structure was that of pseudowollastonite.

First, a thin layer 53 including Mg, Ca, Sr, Eu, Si and O, as constituting elements, was formed on a Si substrate 51 with a thermal oxide layer 52 about 500 nm thick formed on its surface, as shown in FIG. 7A.

For the layer formation, a magnetron sputtering system mounted with 3 cathodes was used. The thin layer 53 about 500 nm thick was formed by using 3 targets MgSiO₃, CaSiO₃ and SrSiO₃ each having about 2% of Eu₂O₃ added and supplying 200 W of RF power to each target so that a precursor 71 was obtained. In this layer forming operation, the temperature of the substrate 51 was 200°C, the pressure in the chamber was kept at about 1 Pa by flowing the mixed gas of argon and oxygen in the chamber, and the deposition rate was about 3 nm/min.

Then, the precursor 71 was heat treated at about 1000°C in an Ar atmosphere containing 2% of H₂ using a vacuum annealing system to obtain a fluorescent structure 72 including a fluorescent substance 59 comprised of a fluorescent thin layer 54 and an adjacent layer 52 on the substrate 51 (FIG. 7B).

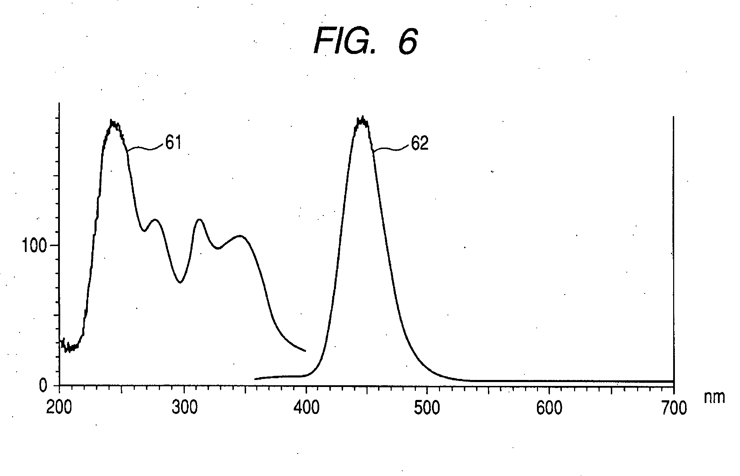

When the resultant fluorescent structure 72 was exposed to 254 nm UV light from a mercury lamp, blue emission with excellent color purity was obtained. When excitation and emission spectra were measured with spectrophotofluorometer, an excitation spectrum 61 having the maximum peak at 245 nm and an emission spectrum 62 having a peak at 447 nm were obtained, as shown in FIG. 6. The blue emission was as excellent as (0.153, 0.037) based on CIE colorimetric system. The emission spectrum was broad and intense and the emission lifetime was as short as about 1 µsec due to the 4f - 5d transition of divalent Eu ion. Separately, the fluorescent substance was formed on a quartz substrate in the same manner as above and the quantum efficiency was measured with an integrating sphere. The measurement was 0.57.

The examination of the dependency of the fluorescent substance having a pseudowollastonite crystal structure on temperature of the substrate revealed that the change in emission intensity of the fluorescent substance having a pseudowollastonite crystal structure (represented by the curve plotted with ●) was smaller than that of the fluorescent substance having a diopside crystal structure (represented by the curve plotted with ▲) as shown in FIG. 9. This indicates that the fluorescent substance having a pseudowollastonite crystal structure is stable against temperature.

The X-ray fluorescence analysis using a Rh tube and the inductively coupled plasma emission spectrometry conducted for the fluorescent thin layer 54 of the resultant fluorescent substance 59 showed that in the oxide of (Mgₓ, Ca_{y}, Sr_{z}, Eu_{w})Si, x = 0.53, y = 0.25, z = 0.2 and w = 0.02.

By the X-ray diffraction analysis using CuKα ray, a peak associated with the pseudowollastonite crystal structure was observed. The evaluation of electron beam diffraction using a transmission electron microscope showed that the fluorescent thin layer 54 had a pseudowollastonite crystal structure where the metal atoms (Mg, Sr, Ca) and the SiO₄ three-membered ring were alternately stacked.

Further, the observation of the cross-sectional structure of the fluorescent thin layer using a transmission electron microscope showed that the fluorescent thin layer had a crystal face comprised of two kinds of layers A, B stacked alternately ABABAB ·· (A = SiO₄ or GeO₄ tetrahedral layer, B = divalent metal ion layer), as shown in FIGS. 5A and 5B.

In the heat treatment step, substance diffusion was caused between the thin layer 53 and the adjacent layer 52, whereby the interface 55 of the fluorescent thin layer and the adjacent layer had a curved surface on a cycle 0.1 to 1 µm. The heat treatment utilizing this substance diffusion made possible the preparation of a fluorescent substance 59 which suffered less composition fluctuation, had fewer grain boundaries or defects, and hence an excellent crystallinity. This improved the luminance, color purity and stability of the fluorescent thin layer. Furthermore, the resultant fluorescent thin layer showed excellent characteristics in dependency of light emission caused by UV light irradiation on temperature.

The fluorescent substance 59 had some other structural characteristics. One of the characteristics was that the angle e between the stacked crystal face and the substrate surface was fixed, for example, 40°. It was also found that the fluorescent thin layer 54 had vacant spaces 56 (portions having lower density) about 1 µm³ in size in it inside. It is assumed that these characteristic thin layer structure (the curved shape of the interface, the angle between the crystal face and the substrate surface, vacant spaces) makes it possible to effectively take out the light emitted in the inside of the fluorescent material outside. That is, it is assumed that excellent external quantum efficiency can be obtained by such a structure.

If the power supplied to the 3 targets MgSiO₃, CaSiO₃ and SrSiO₃ during the deposition is controlled and fluorescent materials of various compositions are prepared, excellent fluorescent substances can be obtained which have compositions of the oxide of (Mgₓ, Ca_{y}, Sr_{z}, Eu_{w}) Si, where 0.45 ≤ x, 0.05 ≤ y ≤ 0.5 and 0.05 ≤ z ≤ 0.5 and 0 < w ≤ 0.4.

### Example 2

In this example, a fluorescent thin layer 54 including Mg, Ca, Sr, Eu, Si and O as constituting elements was prepared on a single crystal substrate or a ceramic substrate.

As a substrate 51, a sapphire single crystal substrate was used.

First, a SiO₂ thin layer about 500 nm thick was formed as an adjacent layer 52 on the substrate 51. Layer formation was performed by magnetron sputtering using a SiO₂ target. The substrate temperature was 200°C or lower, the pressure in the chamber was kept at 0.5 Pa by flowing argon gas in the chamber, and the deposition rate was 6 nm/min.

Then a thin layer 53 was formed which includes Mg, Ca, Sr, Eu, Si and O as constituting elements. For the layer formation, a magnetron sputtering system mounted with 3 cathodes was used. The thin layer 53 about 500 nm thick was formed by using 3 targets MgSiO₃, CaSiO₃ and SrSiO₃ each having about 5% of Eu₂O₃ added and supplying 180 W, 200 W and 200 W of RF power to the respective targets while keeping the substrate temperature at 100°C, the pressure in the chamber at about 1 Pa by flowing a mixed gas of argon and oxygen, and deposition rate at 3 nm/min so that a precursor 71 was obtained (FIG. 7A).

Then, the precursor 71 was heat treated at about 1000°C in a He atmosphere containing 3% of H₂ using a vacuum annealing system to obtain a fluorescent structure 72 including a fluorescent substance 59 comprised of a fluorescent thin layer 54 and an adjacent layer 52 on the substrate 51 (FIG. 7B).

When the resultant fluorescent substance 59 was exposed to UV light, blue emission with excellent color purity was obtained. The X-ray fluorescence analysis using a Rh tube and the inductively coupled plasma emission spectrometry conducted for the resulting fluorescent thin layer 54 showed that in the oxide of (Mgₓ, Ca_{y}, Sr_{z}, Eu_{w}) Si, x = 0.45, y = 0.3, z = 0.2 and w = 0.05.

The process of this example makes possible the preparation of a fluorescent substance on a SrTiO₃ single crystal substrate or a fired BaTiO₃ ceramic substrate. This allows a fluorescent substance to find wider application.

### Example 3

In this example, a fluorescent thin layer including Mg, Ca, Sr, Eu, Si, Ge and O as constituting elements was prepared.

As a substrate 51, a sapphire single crystal substrate was used.

First, a GeO₂ thin layer about 500 nm thick was formed as an adjacent layer 52. Layer formation was performed by magnetron sputtering using a GeO₂ target. The substrate temperature was 100°C, the pressure in the chamber was kept at 0.5 Pa by flowing argon gas in the chamber, and the deposition rate was 5 nm/min.

Then a thin layer 53 was formed which includes Mg, Ca, Sr, Eu, Si and O as constituting elements. For the layer formation, a magnetron sputtering system mounted with 3 cathodes was used. The thin layer 53 about 500 nm thick was formed by using 3 targets MgSiO₃, CaSiO₃ and SrSiO₃ each having about 5% of Eu₂O₃ added and supplying 180 W, 180 W and 200 W of RF power to the respective targets while keeping the substrate temperature at 100°C, the pressure in the chamber at about 1 Pa by flowing a mixed gas of argon and oxygen, and deposition rate at 3 nm/min so that a precursor 71 was obtained (FIG. 7A).

Then, the precursor 71 was heat treated at about 850°C in a He atmosphere containing 3% of H₂ using a vacuum annealing system to obtain a fluorescent structure 72 including a fluorescent substance 59 comprised of a fluorescent thin layer 54 and an adjacent layer 52 on the substrate 51 (FIG. 7B).

Then the substrate on which a layer was formed was heat treated at about 850°C in a He atmosphere containing 2% of H₂ using a vacuum annealing system (FIG. 7B).

When the annealed substrate having a layer formed on it was exposed to UV light, blue emission with excellent color purity was obtained. The X-ray fluorescence analysis using a Rh tube and the inductively coupled plasma emission spectrometry conducted for the resultant fluorescent thin layer showed that in the oxide of (Mgₓ, Ca_{y}, Sr_{z}, Eu_{w}) (Si₁₋ₐGeₐ), x = 0.5, y = 0.25, z = 0.2, w = 0.05 and a = 0.3.

### Example 4

In this example, a display was produced to which the fluorescent substance of the present invention was applied.

As shown in FIG. 8, the display of this example included: a vacuum container made of glass (not shown in the figure); fluorescent substances 59 having the same constitution as the fluorescent substance of example 1 which were formed on a substrate 84; and an electron-emitting devices 81 formed on a substrate 80, the fluorescent substances 59 and the electron-emitting devices 81 being placed in the vacuum container so that they faced each other. The space between the fluorescent substances 59 and the electron-emitting devices 81 was an evacuated space 88. A plurality of electron-emitting devices were arrayed, and each fluorescent substance was exposed to the electron beam 86 emitted from each electron-emitting device and accelerated by an accelerating power source 85 so that the fluorescent substance was allowed to emit light 87. Images or characters can be displayed using the light emitted from the fluorescent substances 59.

A fluorescent layer was comprised of: a fluorescent material including Mg, Ca, Sr, Eu, Si and O as constituting elements and having a crystal structure of pseudowollastonite; and a quartz substrate on which the fluorescent material was arranged. The thickness of the fluorescent layer was about 1100 nm, and an aluminum layer 80 nm thick was formed as a metal back 83 on the fluorescent layer.

The electron-emitting devices 81 were Spindt emitters and the electron beam accelerating voltage was 10 kV.

The display of this example is capable of providing blue display excellent in color purity and displaying images with high visibility and stability.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A fluorescent material comprising an element selected from the group consisting of Mg, Ca, Sr and Ba; an element selected from the group consisting of Si and Ge; an element selected from the group consisting of rare earth elements; and oxygen and having a pseudowollastonite crystal structure.

2. The fluorescent material according to claim 1, wherein the fluorescent material has a composition of (Mgₓ, Ca_{y}, Sr_{z}, Eu_{w}) (Si₁₋ₐGeₐ) oxide, where 0.45 ≤ x, 0.05 ≤ y ≤ 0.5, 0.05 ≤ z ≤ 0.5, 0 < w ≤ 0.4 and 0 ≤ a ≤ 1.

3. The fluorescent material according to claim 2, wherein 0.45 ≤ x ≤ 0.55, 0.15 ≤ y ≤ 0.4, 0.05 ≤ z ≤ 0.35, 0.01 < w ≤ 0.1 and a = 0.

4. A fluorescent substance comprising a portion comprised of the fluorescent material according to claim 1; and an adjacent layer which is comprised of an element selected from the group consisting of Si and Ge and is in contact with the portion.

5. The fluorescent substance according to claim 4, wherein the interface of the portion comprised of the fluorescent material and the adjacent layer has a curved shape on a cycle 0.1 to 1 µm.

6. A fluorescent substance comprising a layer comprised of the fluorescent material according to claim 1 and a layer comprised of an element selected from the group consisting of Si and Ge, the layers stacked on a substrate.

7. A display comprising a fluorescent substance according to claim 6 and a means of exciting the fluorescent substance.

8. A process for preparing a fluorescent substance comprising the steps of:
preparing a precursor by providing a first member which is comprised of an element selected from the group consisting of Mg, Ca, Sr and Ba, a rare earth element, an element selected from the group consisting of Si and Ge, and oxygen and a second member which is comprised of Si or Ge and arranging the second member adjacent to the first member; and
heat-treating the precursor in a reduced atmosphere.

9. The process for preparing a fluorescent substance according to claim 8, wherein the precursor comprises a layer comprised of the first member and a layer comprised of the second member, the layers stacked on a substrate.

10. A display, comprising an oxide fluorescent substance that has a crystal structure of pseudowollastonite; and a means of exciting the oxide fluorescent substance.
